Europäisches Patentamt

European Patent Office

Office européen des brevets

(19)

(11) Veröffentlichungsnummer: **0 064 650**

**A2**

(12) # EUROPÄISCHE PATENTANMELDUNG

(21) Anmeldenummer: **82103488.1**

(51) Int. Cl.³: **G 03 B 17/26**

(22) Anmeldetag: **24.04.82**

(30) Priorität: **08.05.81 DE 3118210**

(43) Veröffentlichungstag der Anmeldung:
**17.11.82 Patentblatt 82/46**

(84) Benannte Vertragsstaaten:
**DE FR GB**

(71) Anmelder: **AGFA-GEVAERT Aktiengesellschaft**

**D-5090 Leverkusen 1(DE)**

(72) Erfinder: **Hoffacker, Franz, Dipl.-Ing.**
**Schumannweg 11**
**D-4018 Langenfeld(DE)**

(72) Erfinder: **Lührig, Hermann, Dipl.-Ing.**
**Heinrich-von-Kleist-Strasse 12**
**D-5090 Leverkusen 1(DE)**

(72) Erfinder: **Mäthner, Hermann**
**Hadwigastrasse 23**
**D-5000 Köln 80(DE)**

(54) **Kapsel für eine Filmpatrone und Verfahren zu deren Herstellung.**

(57) Eine Kapsel (1) zur Aufnahme eines photographischen Rollfilmes besteht aus einem Mantel (2) mit einem lichtdicht ausgekleideten Patronenmaul (5, 6) zum Hindurchführen des Filmes und zwei Spiegelsymmetrischen Kappen (3,4) die aus verformten thermoplastischen Kunststoff hergestellt sind, wobei der Mantel (2) mindestens im Bereich der Oberlippe (5) verstärkt ist und die lichtdichte Auskleidung durch an den Innenflächen des Patronenmaules (5, 6) direkt befestigten Einzelfasern (21, 22) gebildet wird und die Kappen (3, 4) mit Vorsprüngen (8) versehen sind, die das Patronenmaul seitlich (7) und von vorne (8) übergreifend abschließen. Verfahren zur Herstellung der Kapseln (1) und der Kappen (3, 4) werden angegeben.

FIG. 1

EP 0 064 650 A2

AGFA-GEVAERT                    5090 Leverkusen, Bayerwerk
AKTIENGESELLSCHAFT

Patentabteilung               HRS/Kü-c


Kapsel für eine Filmpatrone und Verfahren zu deren
Herstellung
_____

Die Erfindung betrifft eine Kapsel zur Aufnahme eines photographischen Rollfilmes, insbesondere eines Kleinbildfilmes vom Typ 135, bestehend aus einem Mantel mit einem lichtdicht ausgekleideten Patronenmaul zum Hindurchführen des Filmes und zwei spiegelsymmetrischen Kappen sowie Verfahren zur Herstellung derartiger Kapseln.

Das Wesen der vorliegenden Erfindung soll am Beispiel eines Films vom Typ 135 beschrieben werden. Grundsätzlich sind die erfindungsgemäßen Merkmale jedoch auch auf ähnliche Filmpatronen zu übertragen. Entsprechend der Norm (DIN 4535 Blatt 1, ISO/R 1007 - 1009 oder USA SI PH 1.14 1965) wird unter Patrone die Spule mit der sie umgebenden lichtdichten Kapsel verstanden.

Die Kapsel ihrerseits besteht aus dem im wesentlichen ringförmigen Mantel mit einem meist tangential angesetzten, lichtdicht ausgekleideten Patronenmaul. Der Mantel wird axial beidseitig durch je eine Kappe mit den für die Lagerung der Spule erforderlichen Bohrungen verschlossen.


AG 1783 - EP

Es ist allgemein bekannt, Kapseln der beschriebenen Art aus Blech herzustellen, wie das die großen Filmhersteller auch fast ausnahmslos tun. Diese aus Blech hergestellten Kapseln werden durch zwei gleiche, rotationssymmetrische Kappen verschlossen. Um diese rotationssymmetrischen Kappen auf den Mantel aufsetzen zu können, muß das Patronenmaul seitlich entsprechend ausgespart werden. Um diese Aussparungen gegen das Einfallen von Licht abzudichten, ist es erforderlich, den in das Maul eingeklebten Plüsch von der Ober- und der Unterlippe aus je etwa 5 mm bis ins Innere des ringförmigen Mantelteils hineinreichen zu lassen. Der dadurch entstehende, zusätzliche Bedarf an relativ teurem Plüsch ist etwa doppelt so hoch als nötig wäre, um das Maul nur in Laufrichtung des Films abzudichten. Außerdem berühren die Spulenflansche den nach innen geklebten Plüsch. Die dadurch entstehende Reibung erhöht den Leistungsbedarf elektrisch angetriebener Kameras.

Ein weiterer Nachteil besteht darin, daß die Lichtdichtung zwischen dem Rand der Kappen und den seitlich über das Maul hinausragenden Enden der Plüschstreifen nur dadurch entsteht, daß die Ränder der Kappen in den Plüsch hineingedrückt werden. Bei unachtsamer oder auch unsachgemäßer Handhabung einer Patrone kann es vorkommen, daß die Plüschstreifen von den Kappenrändern weggedrückt werden. Die Folge davon ist Lichteinfall in die Patrone und Verschleierung des lichtempfindlichen Films.

AG 1783

0064650

Weiterhin wurde vorgeschlagen, die Kapsel aus thermoplastischen Kunststoff durch Spritzgießen herzustellen.
Diesen Vorschlägen ist gemeinsam, den Mantel und eine
Kappe in einem Stück zu spritzen und nur eine Kappe
als separates Teil herzustellen und nachträglich aufzusetzen. Beispiele dafür sind die im Handel·befindlichen Patronen. Weitere Lösungen in Spritzgießtechnik beschreiben die DE-A 2 612 352 und 2 724 676.
Allen diesen Lösungen ist gemeinsam, daß die Maulenden seitlich durch entsprechende Vorsprünge der
Kappen abgedeckt werden, der Plüsch braucht also
nicht bis ins Innere des ringförmigen Mantelteils
zu reichen. Da die Enden der ins Maul eingeklebten
Plüschstreifen jedoch nur stumpf bis an die Kappenvorsprünge reichen, müssen sehr enge Fertigungstoleranzen eingehalten werden, um an den Maulecken
zuverlässigen Schutz gegen Lichteinfall, das sogenannte Eckenlicht, zu gewährleisten. Ein prinzipieller Nachteil aller durch Spritzgießtechnik hergestellten Kapseln besteht ferner darin, daß die Schußzahl der Spritzgießmaschinen wegen der an die fertigen
Kapseln zu stellenden Genauigkeitsanforderungen begrenzt ist und daß das Einkleben der Plüschstreifen
nur als diskontinuierlicher und demzufolge entsprechend langsamer Vorgang ablaufen kann.

Der Erfindung liegt die Aufgabe zugrunde, eine Rollfilmkapsel der eingangs genannten Art und Verfahren
zu deren Herstellung zu finden, mit denen es auf
einfache Weise möglich ist, die Rollfilmkapsel aus
einem billigen, thermoplastischen Massenkunststoff

AG 1783

- 4 -

wirtschaftlich herzustellen, wobei der Schutz gegen Eckenlicht verbessert und zugleich das Aufbringen der lichtdichten Maulauskleidung in einem rationellen, kontinuierlichen Verfahren ermöglicht werden soll.

Diese Aufgabe wird bei einer Kapsel der einleitend genannten Ausbildung gemäß der Erfindung dadurch gelöst, daß

a) der Mantel und die Kappen aus verformtem thermoplastischen Kunststoff hergestellt sind,

b) der Mantel mindestens im Bereich der Oberlippe des Patronenmantels verstärkt ist,

c) die lichtdichte Auskleidung des Patronenmantels durch im wesentlichen senkrecht zur Filmebene ausgerichtete, an den Innenflächen des Patronenmaules direkt befestigte Einzelfasern gebildet wird und

d) die Kappen mit Vorsprüngen versehen sind, die die Patronenmaulecken seitlich und von vorn übergreifend abschließen.

Überraschenderweise wurde gefunden, daß sich eine Rollfilmkapsel so gestalten läßt, daß Sie durch Verformung, vorzugsweise Thermoformung, aus thermoplastischem Halbzeug herstellbar ist. Nach der Erfindung sind die beiden Kappen spiegelsymmetrisch ausgeführt. Sie besitzen vorzugsweise tangential angesetzte Vorsprünge zur seitlichen Begrenzung des Mauls. Der kreisförmige

AG 1783

Teil der Kappen sowie die Vorsprünge sind umlaufend umgebördelt, so daß nicht nur der ringförmige Teil des Mantels, sondern auch das Maul übergreifend lichtdicht abgeschlossen werden. Besonders wirksam gegen Eckenlicht ist dabei die Tatsache, daß das Maul beidseitig und auch von vorn (gesehen in Laufrichtung des Films) übergreifend abgeschlossen wird. Die Kappen sind hinterschneidungsfrei gestaltet, so daß sie sich mühelos thermoformen lassen. Der innere, topfartig eingezogene Teil der Kappen wird vorzugsweise konisch ausgeführt. Dadurch lassen sich die Kappen raumsparend stapeln. Außerdem ist die konische Form günstig für das Aufsetzen der Kappen auf den Mantel der Kapsel. Zur Herstellung der so gestalteten Kappen können handelsübliche Thermoformautomaten eingesetzt werden.

Zur Herstellung des Mantels wird von einem durch Extrusion hergestellten Profil ausgegangen. Im einfachsten Fall ist dieses Profil ein flaches Band, dessen Breite gleich der Länge der Abwicklung des Mantels ist. Wenigstens derjenige Randbereich dieses Profils, aus dem bei der weiteren Verarbeitung zu einem Patronenmantel die Oberlippe des Mauls ge-bildet wird, ist zur Erhöhung der Biegesteifigkeit verstärkt. Dadurch wird ein Aufwölben der Oberlippe und damit unerwünschter Lichteinfall in die Patrone verhindert.

AG 1783

Die Verstärkung wird vorzugsweise so vorgenommen, daß ein die gewünschte Erhöhung der Biegesteifigkeit bewirkendes Material in das Innere des Mantelprofils eingebettet wird. Die Unteransprüche nennen mehrere dieser Verstärkungsmöglichkeiten. Besonders wirksam sind zwei in gegenseitigem Abstand eingebettete Verstärkungsmaterialien (Sperrholzeffekt). Eine vorteilhafte Lösung stellt auch die Verstärkung mit Glasfasern dar. In diesem Falle können die in den Filmentwicklungsanstalten in großen Mengen als Abfall anfallenden Kapseln zerkleinert und das anfallende Material wiederverwendet werden. Werden die Kapseln aus demselben Kunststoff wie die Spulen hergestellt, so können beide Teile gemeinsam der Aufarbeitung und Wiederverwendung zugeführt werden.

Eine besonders hohe Sicherheit gegen das Aufwölben der Oberlippe und damit Lichteinfall in die Patrone erreicht man dadurch, daß die Oberlippe mit einer Wölbung zum Film hin hergestellt wird. Diese Wölbung kann entweder durch entsprechende Thermoformung der Oberlippe oder auch dadurch erzielt werden, daß das Verstärkungsmaterial mit einer derartigen Vorspannung in den Kunststoff eingebettet wird, daß sich nach dem Auftrennen des Mantelprofils in einzelne Abschnitte die erforderliche Wölbung der Oberlippe von allein einstellt.

Besonders wirksam ist diese Wölbung der Oberlippe dann, wenn auf das Patronenmaul eine Kraft in Achsrichtung der Patrone ausgeübt wird. Das Maul wird in diesem Fall auf Knickung beansprucht. Wegen der Wölbung zum Film

AG 1783

hin kann die Oberlippe nicht nach außen ausknicken, d.h. das Maul wird in diesem Falle sogar fester geschlossen. Da die erfindungsgemäßen Kappen das Maul seitlich übergreifen, braucht dieses nicht, wie die aus Blech gefertigten Patronen entsprechend dem Stande der Technik, seitlich ausgespart werden. Erst dadurch ist es möglich, die zur lichtdichten Auskleidung des Mauls verwendeten Einzelfasern direkt an den Innenseiten von Ober- und Unterlippe zu befestigen, d.h. ohne besonderes Trägermaterial für die Einzelfasern. Es wird vorgeschlagen, das Aufbringen der Fasern in einfacher Weise durch elektrostatisches Beflocken vorzunehmen.

Vorteilhaft ist ebenso das Beflocken des Mantelprofils unmittelbar im Anschluß an dessen Extrusion. Dadurch wird die Beflockung und damit die lichtdichte Auskleidung des Patronenmauls zu einem kontinuierlichen Vorgang. Bei den Geschwindigkeiten, die heute von kontinuierlichen Beflockungsanalgen erreicht werden, ergibt sich, bei einbahniger Ausführung, ein Ausstoß von mehreren hundert Patronenmänteln pro Minute (bezogen auf eine Patrone Typ 135).

Die Aufgabe der Herstellung einer Kapsel der einleitend genannten Art wird erfindungsgemäß dadurch gelöst, daß das Profil des Kapselmantels extrudiert, beflockt, in Kapsellänge geschnitten und zu einem Mantel thermogeformt und in einer Montageeinheit in den Kapsel-

AG 1783

mantel eine Filmspule eingebracht wird und die Kappen beidseitig auf denKapselmantel aufgebracht und befestigt werden.

Bei einer vorteilhaften Durchführung des Verfahrens zur Herstellung der Kapsel wird die Verstärkung der Kapsel mindestens im Bereich des Patronenmantels durch Ummanteln beim Extrudieren des Bandes eingebracht.

Die Herstellung der Kapsel kann in sehr vorteilhafter Weise nach mehreren Verfahren erfolgen.

Nach einem ersten Verfahren wird das zur Herstellung des Patronenmantels erforderliche Halbzeug mit Verstärkung im Maulbereich als flaches Band hergestellt. Zum leichteren Abwinkeln der Unterlippe ist es vorteilhaft, an entsprechender Stelle eine Schwachstelle einzuarbeiten. Anschließend werden die beiden Ränder dieses Bandes mit einem vorzugsweise schwarz eingefärbten Flock beflockt. Das Band wird dann in einzelne Stücke, deren Länge der Höhe des Patronenmantels entspricht, aufgeschnitten. Durch Thermoformung werden aus diesen Stücken die Patronenmäntel hergestellt, die dann der Endmontage zusammen mit den Spulen und den eingangs beschriebenen Kappen zugeführt werden.

Eine Variante dieses Verfahren besteht darin, daß das zur Herstellung der Mäntel erforderliche Halbzeug als

<u>AG 1783</u>

halboffenes Profil mit bereits angeformter Unterlippe extrudiert wird. Für die anschließende elektrostatische Beflockung der Randstreifen im Patronenmaulbereich ist es vorteilhaft, wenn diese in parallen Ebenen liegen. Nach der Beflockung wird das Profil über einen Runddorn mit dem Innendurchmesser des Mantels geführt. Durch Thermoformung erhält das Mantelprofil seine endgültige Gestalt und wird nach dem Auftrennen in Einzelstücke, deren Längen der Patronenhöhe entsprechen, der Endmontage zugeführt.

Eine vom Engergieverbrauch besonders vorteilhafte Variante des Verfahrens besteht darin, daß das Mantelprofil bereits in der endgültigen Gestalt hergestellt und elastisch soweit aufgebogen wird, daß die Randstreifen elektrostatisch beflockt werden können. Nach der Beflockung wird das Profil in seine ursprüngliche Gestalt zurückgeführt und in die erforderlichen Einzelstücke aufgetrennt.

Vorteilhafte und für die Verwendung der beschriebenen Kapseln günstige Eigenschaften werden bei den Verfahren zur Herstellung der Kapseln dadurch erhalten, daß die Kappen am Kapselmantel durch Verschweißen oder Verkleben befestigt werden, wobei die zum axialen Abziehen der Kappen von dem Kapselmantel erforderlichen Kräfte bei beiden Kappen unterschiedlich groß gestaltet werden, und diese gewünschten unterschiedlichen axialen Abzugskräfte durch unterschiedlich große Klebe- bzw. Schweißbereiche erzeugt werden.

AG 1783

Die Schweiß- oder Klebebereiche können ihrerseits in kleinere Teilbereiche unterteilt sein.

Durch die unterschiedlich eingestellte Abzugskraft der Kappen wird erreicht, daß sich beim gleichzeitigen Ziehen an beiden Kappen immer nur diejenige löst, die schwacher befestigt ist. Hierdurch entstehen für eine automatische Weiterverarbeitung definierte Verhältnisse, so daß der Film gerichtet einer automatischen Verarbeitung zugeführt werden kann.

Die Erfindung wird anhand folgender Zeichnungen näher beschrieben und erläutert:

Es zeigt:

Fig. 1      eine Ansicht der Kapsel,

Fig. 2      eine Ansicht des Mantels,

Fig. 3      eine Ansicht der unteren Kappe,

Fig. 4 a - d
            Schnitte durch als flaches Band hergestellte
            Mantelprofile mit unterschiedlicher Maulverstärkung,

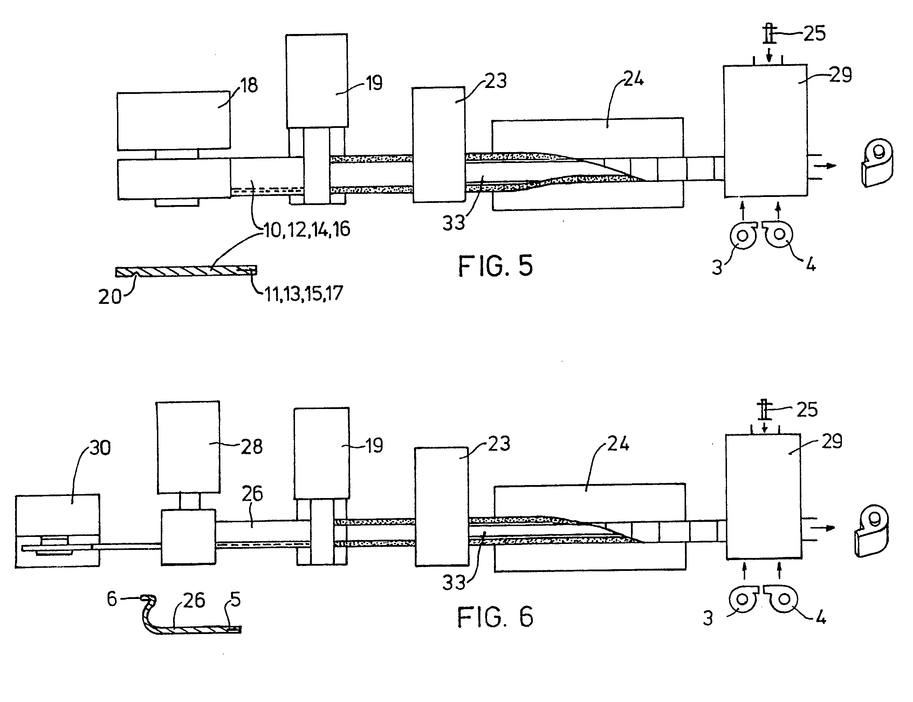

Fig. 5      eine schematische Darstellung der
            Herstellung der Kapseln aus einem bereits
            extrudierten Band,

Fig. 6      eine schematische Darstellung der
            Herstellung der Kapseln aus einem extrudierten
            halboffenem Mantelprofil,

AG 1783

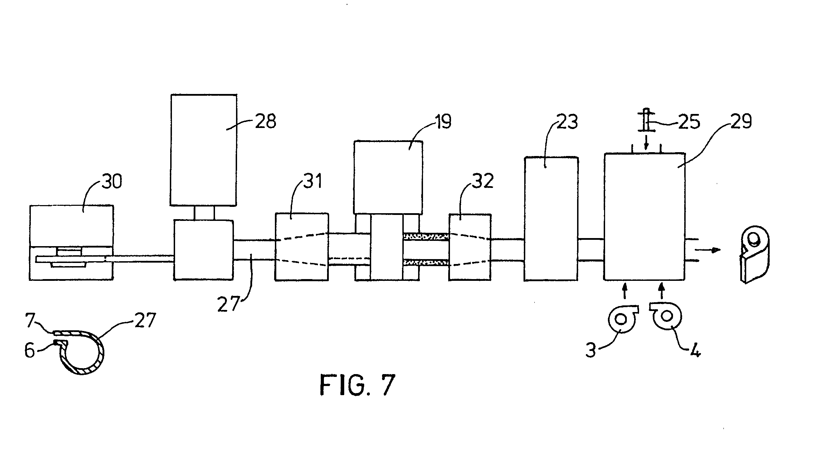

Fig. 7    eine schematische Darstellung der
         Herstellung der Kapseln aus einem extrudierten
         fertigen Mantelprofil.


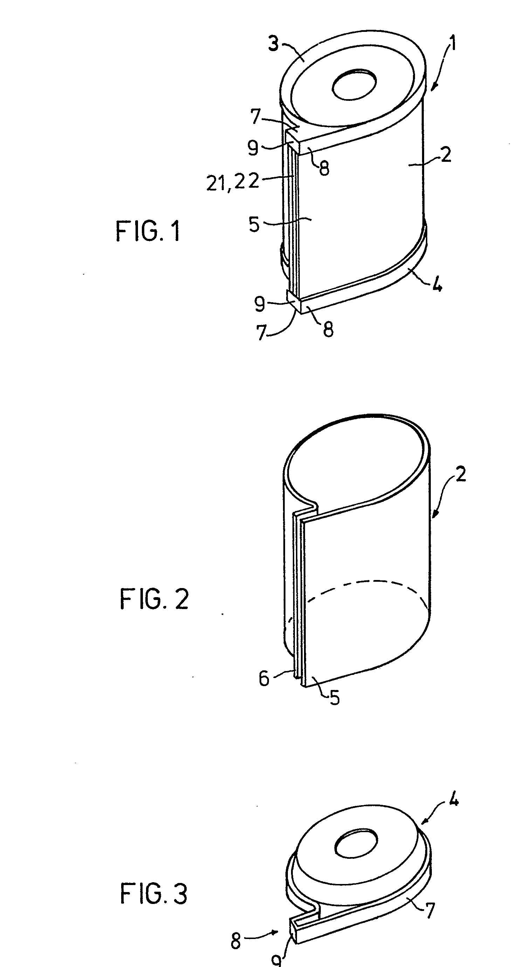

Wie in Fig. 1 dargestellt, besteht die Kapsel 1 aus dem Mantel 2, der oberen Kappe 3 sowie der unteren Kappe 4. Aus Gründen einer besseren Klarheit wurden in der Darstellung die Spule und die lichtdichte Auskleidung des Mauls weggelassen. Fig. 2 zeigt eine Ansicht des Mantels 2 mit dem tangential angesetzten Maul, bestehend aus Oberlippe 5 und Unterlippe 6. Fig. 3 zeigt eine der Kappen 4. Die Kappen 3 und 4 sind spiegelsymmetrisch ausgeführt und besitzen einen mit der Maulform korrespondierenden Vorsprung 8. Die Kappen sind mit einer ganz umlaufenden Umbördelung 7 versehen. Diese Umbördelung 7 ermöglicht eine vollständige formschlüssige Verbindung mit dem Mantel 2. Dadurch entsteht ein umlaufendes Labyrinth, das die erforderliche Lichtdichtigkeit der Kapsel 1 sicherstellt. Der Steg 9 der Umbördelung 7 deckt das Maul auch an den beiden seitlichen Ecken ab. Daduch entsteht ein besonders wirksamer Schutz gegen Eckenlicht.

Die beschriebenen Kappen werden durch Thermoformung aus einem thermoplastischen Kunststoffband, z.B. Polystyrol hergestellt. Die Herstellung ist mit handelsüblichen Thermoformautomaten möglich. Wie Fig. 3 zeigt, werden die Kappen vorzugsweise konisch gestaltet. Dadurch sind sie leicht stapelbar. Außerdem erleichtert die Konizität das Aufsetzen der Kappen 3,4 auf den Mantel 2.


AG 1783

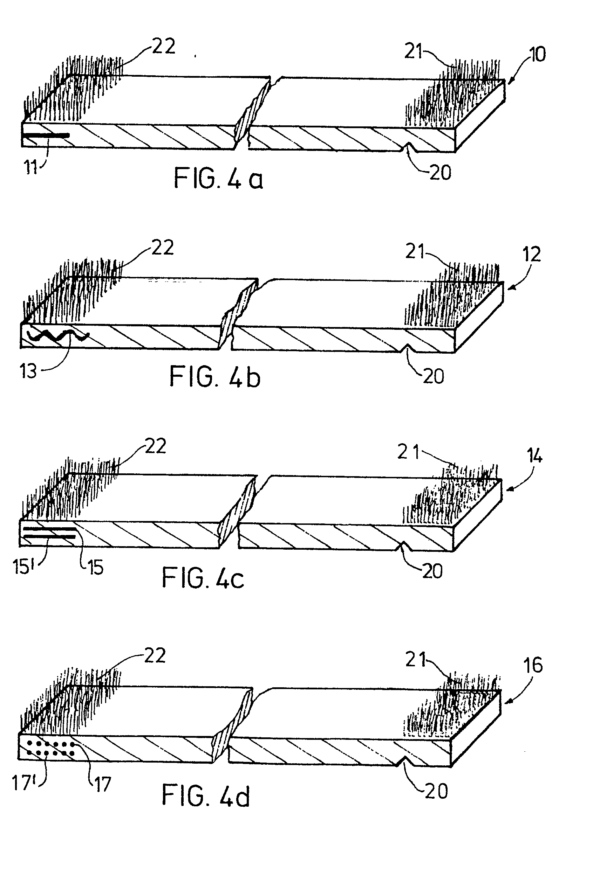

Der Mantel 2 der Kapsel 1 wird ebenfalls aus einem Thermoplasten hergestellt. Dabei wird von einem entsprechend gestalteten, durch Extrusion hergestellten Profil ausgegangen. In der einfachsten Form ist dieses Profil ein flaches Band, dessen Breite der Abwicklung des Mantels 2 entspricht. Die Fig. 4 a bis 4 d zeigen einige Beispiele für ein derartiges Band. Für die Herstellung eines solchen Bandes ist beispielsweise Polystyrol, schwarz eingefärbt, ein geeigneter Thermoplast. Schwarz eingefärbtes Polystyrol ist etwa ab 0,5 mm Dicke lichtdicht. Material dieser Dicke hat jedoch nicht die für die Oberlippe 5 erforderliche Biegesteifigkeit.

Es wird deshalb vorgeschlagen, das Mantelprofil zu verstärken. Dazu werden bei der Extrusion des Mantelprofils, beispielsweise in einem Querspritzkopf, Verstärkungsmaterialien in das Profil eingearbeitet. Fig. 4 a zeigt das Profil 10 mit der Verstärkung 11 in Form eines flachen Metallstreifens. Um das Abwinkeln der Unterlippe 6 zu erleichtern, weisen die Profile 10, 12, 14, 16 Kerben 20 auf. Fig. 4 b zeigt als Verstärkung ein biegesteif profiliertes Blechband 13. In Fig. 4 c sind statt eines Blechstreifens zwei dünnere Streifen 15, 15' in gegenseitigem Abstand eingebettet. Durch den hiermit erzielten "Sperrholzeffekt" erhöht sich die Biegesteifigkeit der Oberlippe 5. Fig. 4 d zeigt als Verstärkung eingearbeitete Endlosfasern 17, vorzugsweise Glasfasern.

AG 1783

Auch hier bringt die Anordnung in 2 separaten Lagen 17,17' erhöhte Biegesteifigkeit.

Die Fig. 4 a bis 4 d zeigen weiterhin die an den Rändern aufgebrachten Lichtabdichtungen 21 und 22 für die Unterlippe 6 respektive die Oberlippe 5 der Kapsel 1. Da die Kapsel in der erfindungsgemäßen Ausführung Oberlippe 5 und Unterlippe 6 in voller Länge des Mantels aufweisen und nicht seitlich ausgespart werden müssen, wie es bei Kapseln mit rotationssymmetrischen Kappen erforderlich ist, können die Lichtabdichtungen 21 und 22 kontinuierlich durch direkte elektrostatische Beflockung des Mantels 2 aufgebracht werden. Es ist also kein gewebtes Trägermaterial wie bei dem sonst allgemein verwendeten Plüsch erforderlich.

Vorteilhaft wird die Beflockung unmittelbar im Anschluß an die Extrusion des Profils vorgenommen. Das so erhaltene, im Bereich von Ober- und Unterlippe bereits beflockte Band kann aufgewickelt und später weiterverarbeitet werden.

Fig. 5 zeigt schematisch die Herstellung eines Mantels 2 und mit der Montageeinheit 29 die Herstellung einer kompletten Filmpatrone mit Spule und aufgesetzten Kappen 3, 4.

AG 1783

Das bereits vorgefertigte profilierte Band 10, 12, 14, 16 ist mit einer Schwachstelle, zum Beispiel einer V-förmigen Kerbe 20, und mit einer Einlage 11, 13, 15, 17 zur Verstärkung der Oberlippe 5 versehen (siehe Schnittbild unter der Fig. 5) und wird von einer Abrollung 18 einer Beflockungseinrichtung 19 zugeführt. In der Beflockungseinrichtung werden die beiden Kanten des profilierten Bandes auf der Oberseite beflockt. Die beflockten Ränder bilden später bei dem geformten Mantel 2 die Innenseite des Patronenmaules und dichten die Ober- und Unterlippe 3, 4 gegen Lichteinfall ab.

Das beflockte profilierte Band wird einer Querschneideeinrichtung 23 zugeführt und in Einzelabschnitte aufgeschnitten, deren Länge gleich der Höhe des Mantels 2 ist. Die Abschnitte werden in einer Thermoformstrecke 24 erwärmt und die Unterlippe 6 entlang der Kerbe 20 abgewinkelt. Der zylindrische Teil des Mantels wird um einen Dorn 33, dessen Außendurchmesser gleich dem Innendurchmesser des Mantels 2 ist, gewickelt. So erhält der Mantel 2 seine aus Fig. 2 ersichtliche Form. Die fertigen Mäntel werden dann einer Montagemaschine 29 zugeführt, die die Spulen 25 ein- und die Kappen 3, 4 aufsetzt und befestigt, z.B. durch Kleben oder US-Schweißen.

Ein sehr wirtschaftliches Herstellungsverfahren für Rollfilmpatronen mit einer direkten Herstellung der

AG 1783

Mäntel 2 ist in Fig. 6 dargestellt.

Das Verfahren besteht darin, daß als Halbzeug zur Herstellung der Patronenmäntel 2 ein halboffenes Profil 26 extrudiert wird, das die Unterlippe 6 bereits in der endgültigen, abgewinkelten Form aufweist. Ein solches Profil ist unter der Fig. 6 dargestellt. Die Gestalt des Profils 26 wird vorteilhaft so gewählt, daß Oberlippe 5 und Unterlippe 6 in parallelen Ebenen und horizontal liegen. Dadurch ergeben sich günstigere Voraussetzungen für das Beflocken in der Beflockungseinrichtung 19 (Leim läuft nicht weg). Nach der Beflockung und dem Auftrennen in einzelne Abschnitte in der Trenneinrichtung 23 wird dem Mantel durch Thermoformung über einem Dorn 33 in der Einrichtung 24 die endgültige Form gegeben. In der Montageeinheit 29 werden, nach der Einführung der Spule 25 in den Mantel 2, die Kappen 3, 4 aufgesetzt und befestigt.

Fig. 7 zeigt eine vom Energiebedarf besonders günstige Variante des Verfahrens die darin besteht, daß das Mantelprofil bereits in der endgültigen Form extrudiert und danach soweit elastisch aufgebogen wird, wie es die Beflockung erfordert (z.B. so, daß es die in Fig. 6 gezeigte Form hat). Bei dieser Art des Verfahrens muß vor der Beflockungsanlage 19 eine Vorrichtung 31 zum Aufbiegen des Mantelprofils eingebaut werden, die Thermoformeinrichtung 24

AG 1783

kann entfallen. Nach der Beflockung wird das aufgebogene Profil wieder durch eine Einrichtung 32 in die
extrudierte Form zurückgeführt, oder formt sich
elastisch wieder in die Ursprungsform zurück.

In den Fig. 6 und 7 wird das Verstärkungsmittel 11,
13, 15, 17 direkt beim Extrudieren des Profiles von
einer Abwicklung 30 in das Werkzeug des Extruders
28 eingeführt und von diesem mindestens im Bereich
der Oberlippe 5 in das Kunststoffmaterial eingebettet.
Als Werkzeug kann ein Querspritzkopfextruder bekannter
Bauart Verwendung finden.

Die Verstärkung der Oberlippe 5 kann in ihrer Wirkung noch gesteigert werden. Dazu wird der Oberlippe
5 eine leichte, zur Unterlippe hin gerichtete,
Wölbung erteilt. Diese Wölbung kann durch eine entsprechende Formung der Oberlippe 5 in der Thermoformeinrichtung 24 erfolgen. Eine weitere Möglichkeit besteht darin, daß man die zur Verstärkung
verwendeten Metallstreifen 11, 13, 15, 15' vor dem
Einlauf in den Querspritzkopf des Extruders 28
so vorkrümmt, daß sich nach dem Auftrennen des
Mantelprofils in einzelne Abschnitte die gewünschte
Wölbung der Oberlippe 5 einstellt. Bei Verwendung
von Verstärkungsfasern 17 kann man dieselben auch
mit Vorspannung in den Querspritzkopf des Extruders
28 einlaufen lassen, wodurch sich derselbe Effekt
wie oben ergibt.

AG 1783

Patentansprüche

1. Kapsel zur Aufnahme eines photographischen Rollfilmes, insbesondere eines Kleinbildfilmes vom
Typ 135, bestehend aus einem Mantel mit einem
lichtdicht ausgekleidetem Patronenmaul zum
Hindurchführen des Filmes und zwei spiegelsymmetrischen Kappen, dadurch gekennzeichnet, daß

a) der Mantel (2) und die Kappen (3,4) aus verformtem thermoplastischen Kunststoff hergestellt sind,

b) der Mantel (2) mindestens im Bereich der
Oberlippe (5) des Patronenmaules verstärkt
ist,

c) die lichtdichte Auskleidung des Patronenmaules durch im wesentlichen senkrecht zur
Filmebene ausgerichtete, an den Innenflächen
des Patronenmaules direkt befestigen Einzelfasern (21, 22) gebildet wird und

d) die Kappen (3,4) mit Vorsprüngen (8) versehen
sind, die das Patronanmaul seitlich (7) und
von vorn (9) übergreifend abschließen.

AG 1783

2. Kapsel nach Anspruch 1, dadurch gekennzeichnet, daß die Verstärkung (11,13,15,17) des Mantels (2) im Patronenmaulbereich im thermoplastischen Kunststoff eingebettet ist.

3. Kapsel nach Anspruch 1, dadurch gekennzeichnet, daß die Verstärkung (11,13,15) mit Vorspannung so in den Kunststoff des Mantel (2) eingebettet ist, daß sich eine Wölbung der verstärkten Oberlippe (5) des Patronenmaules zur Unterlippe (6) hin ergibt.

4. Kapsel nach Anspruch 1, dadurch gekennzeichnet, daß die Einzelfasern (21,22) für die lichtdichte Patronenmaulauskleidung durch elektrostatische Beflockung aufgebracht sind.

5. Verfahren zur Herstellung einer Kapsel (1) nach Anspruch 1, dadurch gekennzeichnet, daß das Profil des Kapselmantels extrudiert, beflockt, in Kapsellänge geschnitten und zu einem Mantel thermogeformt wird und in einer Montageeinheit (29) in der Kapselmantel eine Filmspule (25) eingebracht wird und die Kappen (3,4) beidseitig auf den Kapselmantel (2) aufgebracht werden.

6. Verfahren nach Anspruch 5, dadurch gekennzeichnet, daß die Verstärkung (11,13,15,17) mindestens im Bereich des Patronenmaules durch Ummanteln beim Extrudieren des Bandes (10,12,14,16) eingebracht werden.

AG 1783

7. Verfahren zur Herstellung einer Kapsel nach Anspruch 5, dadurch gekennzeichnet, daß ein flaches Band (10,12,14,16) aus thermoplastischem Material im Patronenmaulbereich an beiden Rändern beflockt, in die zur Herstellung der Kapsel (2) erforderlichen Einzelabschnitte aufgetrennt und die beflockten Einzelabschnitte hintereinander aufgereiht auf einem Dorn (33) durch kontinuierliche Thermoformung in die endgültige Form gebracht werden.

8. Verfahren zur Herstellung einer Kapsel nach Anspruch 5, dadurch gekennzeichnet, daß das Profil des Mantel zunächst als halb offenes Profil (26) extrudiert wird, wobei die Unterlippe (6) des Patronenmantels bereits in der endgültigen Form gegenüber dem ringförmigen Teil des Mantels (2) abgewinkelt ist, während der ringförmige Teil einschließlich des zur Bildung der Oberlippe (5) des Patronenmaules verstärkten Randbereiches noch so weit offen ist, daß die Ober- und Unterlippenbereiche in annähernd parallelen Ebenen liegen und mit ihren zu beflockenden Seiten nach derselben Seite zeigen und daß nach der elektrostatischen Beflockung das halb offene Profil (26) durch kontinuierliche Thermoformung (24) über einem entsprechend gestalteten Dorn (33) in die zur Bildung der Kapsel (1) erforderliche geschlossene Form überführt wird.

AG 1783

9. Verfahren zur Herstellung einer Kapsel nach Anspruch 5, dadurch gekennzeichnet, daß das Profil des Mantels in der endgültigen Form (27) extrudiert wird und das Profil elastisch so weit aufgebogen wird, daß die Innenseiten des Patronenmaules im Bereich der Lippen (5,6) beflockt werden können und das Profil nach der Beflockung in seine ursprüngliche Form (27) zurückgeführt wird.

10. Verfahren nach Anspruch 5, dadurch gekennzeichnet, daß die zum axialen Abziehen der Kappen (3,4) von dem Kapselmantel (2) erforderlichen Kräfte bei beiden Kappen (3,4) unterschiedlich groß gestaltet werden und daß die unterschiedlichen axialen Abzugskräfte für die Kappen (3,4) durch unterschiedlich große Klebe- bzw. Schweißbereiche erzeugt werden, die ihrerseits in kleinere Teilbereiche unterteilt sind.

AG 1783

**FIG. 1**

**FIG. 2**

**FIG. 3**

FIG. 4 a

FIG. 4 b

FIG. 4c

FIG. 4 d

FIG. 5

18  19  23  24  25  29

10,12,14,16

20  11,13,15,17

33  3  4

FIG. 6

30  28  19  23  24  25  29

26

6  26  5

33  3  4

3/4

0064650

FIG. 7